# EUROPÄISCHE PATENTSCHRIFT

(11) **EP 2 947 425 B1**
(45) Veröffentlichungstag und Bekanntmachung des Hinweises auf die Patenterteilung: **26.07.2017**
(21) Anmeldenummer: 15163314.6
(22) Anmeldetag: 13.04.2015
(51) Int. Cl.: G01D 5/20

(54) **INDUKTIVER WEGSENSOR UND KOLBEN-ZYLINDER-ANORDNUNG**
INDUCTIVE DISPLACEMENT SENSOR AND PISTON-CYLINDER ASSEMBLY
CAPTEUR DE TRAJECTOIRE INDUCTIF ET SYSTÈME DE CYLINDRE-PISTON

(30) Priorität: 07.05.2014 DE 102014208577
(43) Veröffentlichungstag der Anmeldung: 25.11.2015
(73) Patentinhaber: Schaeffler Technologies AG & Co. KG, 91074 Herzogenaurach (DE)
(72) Erfinder: Jung, Christoph, 77815 Bühl (DE); Herrmann, Tim, 76461 Muggensturm (DE); Giesel, Christian, 79312 Emmendingen (DE)

(56) Entgegenhaltungen:
- DE-A1-102006 041 934
- DE-A1-102012 207 778
- US-A1- 2005 030 010
- US-A1- 2010 117 632
- US-A1- 2014 117 980

## Beschreibung

Die Erfindung betrifft einen induktiven Wegsensor, umfassend ein Spulensystem mit einer planaren Primärspule zur Erzeugung eines Magnetfeldes und wenigstens zwei innerhalb der Primärspule angeordneten, sich überlagernden planaren Sekundärspulen zur Sensierung einer Position eines Targets, welches entlang der Sekundärspulen bewegbar ist, wobei die Sekundärspulen mit je einer Überkreuzung ausgebildet sind, sowie eine Kolben-Zylinder-Anordnung.

US2005030010 beschreibt einen induktiven Wegsensor mit Sekundärspulen.

Aus der DE 10 2012 207 875 A1 ist eine Kolben-Zylinder-Anordnung bekannt, die einen Kolben aufweist, der axial beweglich in einem Zylinder angeordnet ist, wobei an der Kolben-Zylinder-Anordnung ein Sensorsystem zur induktiven Wegaufnahme positioniert ist. An dem Kolben sind wenigstens zwei Targets aus einem elektrisch leitenden Material angeordnet, die radial und axial voneinander beabstandet sind. An dem Zylinder ist ein induktiver Sensor angeordnet, der wenigstens eine Primärspule zur Erzeugung eines Magnetfeldes und wenigstens zwei innerhalb der Primärspule angeordnete Sekundärspulen zur Sensierung der Targetposition aufweist, wobei die Spulenachsen senkrecht zur Bewegungsrichtung des Kolbens verlaufen.

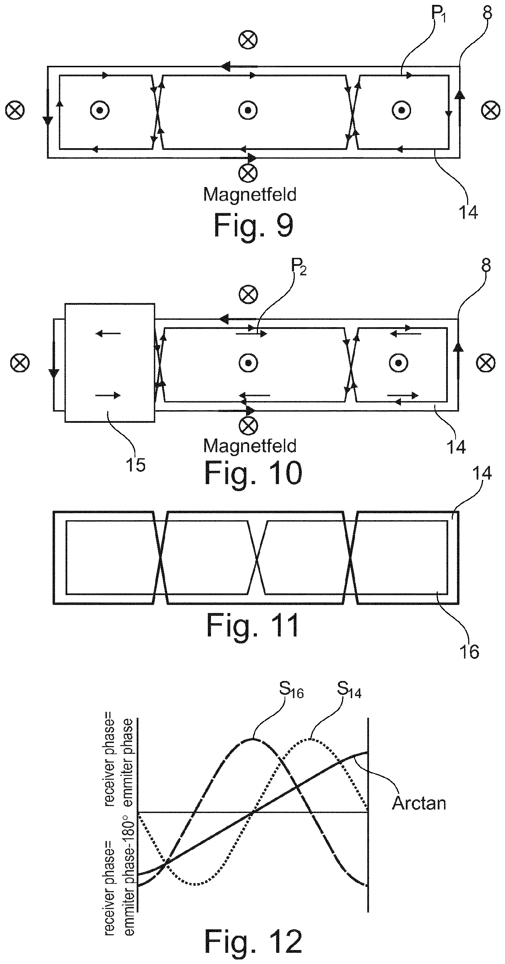

Schematisch ist ein solches induktives Messsystem in Figur 9 dargestellt. Die Primärspule 8 erzeugt aufgrund eines vorgegebenen Stromflusses ein Magnetfeld, das in den Windungen der Sekundärspule 14 Spannungen induziert. Beide Spulen 8, 14 befinden sich auf einer Sensorplatine. Die Sekundärspule 14 ist so gestaltet, dass sich ihre Windung selbst kreuzt. Dadurch entstehen Bereiche mit gegensätzlichem Windungssinn, so dass die in den unterschiedlichen Bereichen induzierten Spannungen ebenfalls gegensätzliche Vorzeichen besitzen (siehe Pfeile P1). Die Flächen der Bereiche sind identisch, so dass der Betrag der Spannungen gleich ist. Im Basiszustand heben sich demnach alle induzierten Spannungen gegenseitig auf. Wird nun, wie in Fig. 10 dargestellt, ein elektrisch leitender Körper in Form eines Targets 15 über die Sekundärspule 14 bewegt, ändert sich lokal das Magnetfeld, so dass sich die induzierten Spannungsanteile in der Sekundärspule 14 nicht mehr komplett gegenseitig aufheben. Es fließt ein Strom bzw. es kann eine Spannung gemessen werden, die in Fig. 10 durch die Pfeile P2 verdeutlicht ist.

Wird nun das Target 15 über die Sensorplatine hinweg bewegt, ändern sich die Verhältnisse der lokal beeinflussten Magnetfelder in den einzelnen Bereichen. Dementsprechend ergibt sich für jede Targetposition ein anderer Strom. Um eine eindeutige Wegmessung zu ermöglichen, ist eine zweite Sekundärspule 16 eingesetzt, die zu der ersten axial versetzt ist (Fig. 11).

Zur Auswertung dieser Sensorsignale S14, S16 der zwei Sekundärspulen 14, 16 wird ein Arcustangens des Quotienten der beiden Spulensignale S14, S16 gebildet. Sind die Signale S14, S16 der beiden Sekundärspulen 14, 16 um 90° phasenverschoben, wie es in Fig. 12 dargestellt ist, so ergibt sich aus der Berechnung des Arcustangens Arctan ein näherungsweiser linearer Verlauf über den gesamten, von dem Target 15 zurückgelegten Messweg. Die Ausgangssignale S14, S16 der Sekundärspulen 14, 16 werden hierbei durch die Geometrie des Sekundärspulen 14, 16 moduliert.

Das beschriebene induktive Messsystem erfordert relativ viel Bauraum, da die Sensorplatine mindestens so lang sein muss wie der zu detektierende Messweg. Bei der Anwendung in einem Kraftfahrzeug steht aber nur begrenzt Bauraum zur Verfügung, weshalb solche induktiven Messsystems dort nur beschränkt einsetzbar sind.

Der Erfindung liegt die Aufgabe zugrunde, einen induktiven Wegsensor sowie eine Kolben-Zylinder-Anordnung anzugeben, welcher nur eine geringere Sensorlänge aufweist und trotzdem ein eindeutiges Messignal abgibt.

Erfindungsgemäß ist die Aufgabe dadurch gelöst, dass die erste Sekundärspule eine Überkreuzung aufweist, die quer zur Bewegungsrichtung des Targets ausgebildet ist, derart, dass die Überkreuzungsachse senkrecht zum Messweg ausgebildet ist, während die zweite Sekundärspule eine Überkreuzung besitzt, welche parallel zur Bewegungsrichtung des Targets verläuft, derart, dass die Überkreuzungsachse parallel zum Messweg ausgebildet ist und das Target in seiner axialen Ausdehnung tailliert ausgebildet ist. Durch die Veränderung der Target- und Spulengeometrie wird der induktive Wegsensor dahingehend verbessert, dass die Länge des Wegsensors nur ein Drittel des von dem Target überschrittenen Messweges beträgt und somit den Bauraumbeschränkungen der Kolben-Zylinder-Anordnung in einem Kraftfahrzeug entgegenkommt. Aufgrund des vorgeschlagenen induktiven Wegsensors kann die Platine, die den Wegsensor trägt, verkürzt werden, was eine geringere Ausdehnung in axialer Richtung nach sich zieht. Somit ist der Einsatz eines induktiven Wegsensors in einer Kolben-Zylinder-Anordnung auch dann möglich, wenn bei dem System der Bauraum in axialer Richtung begrenzt wird. Dies ist insbesondere dadurch möglich, da die Ausgangssignale der Sekundärspulen des induktiven Wegsensors durch die Targetgeometrie moduliert werden.

Vorteilhafterweise weisen die erste, mindestens eine Überkreuzung aufweisende Sekundärspule und die zweite, mindestens zwei Überkreuzungen aufweisende Sekundärspule die gleichen Abmaße auf und überdecken sich annähernd vollständig, wobei die Breite der ersten und der zweiten Sekundärspule kleiner einem halben, von dem Target zurücklegbaren Messweg ist. Dadurch, dass die erste Sekundärspule zum Messweg hin verkürzt ist und die Orientierung der zweiten Sekundärspule um 90° gedreht ist, lassen sich auch bei einer verkürzten Sensorstruktur eindeutige Ausgangssignale, welches der Position des Targets zuordenbar ist, an den Sekundärspulen abnehmen.

In einer Ausgestaltung decken die zwei Windungen der ersten Sekundärspule annähernd gleich große Flächen ab, während die zwei äußeren Windungen der zweiten Sekundärspule gleich große Flächen abdecken und die mittlere Windung der zweiten Sekundärspule eine doppelt so große Fläche umfasst wie jede der äußeren Windungen der zweiten Sekundärspule. Durch diese Geometrie wird sichergestellt, dass der Arcustangens des Quotienten aus den beiden Ausgangssignalen der Sekundärspulen annähernd linear ist und somit eine eindeutige Zuordnung zur Position des Targets herstellbar ist.

In einer Variante ist die Taillierung des Targets annähernd mittig ausgebildet, wobei die axial verlaufende, die Taillierung umfassende Außenkontur des Targets einen stetigen Verlauf aufweist. Mittels dieses stetigen Verlaufes werden an den beiden Sekundärspulen kontinuierliche, um 90° versetzte Ausgangssignale abgenommen.

Der stetige Verlauf der Außenkontur des Targets kann dabei durch unterschiedliche Geometrien erreicht werden. So kann die, die Taillierung umfassende Außenkontur in ihrem Verlauf cosinusartig oder konvex ausgebildet sein. In einer weiteren Alternative steigt die Außenkontur des Targets ausgehend von der Taillierung beidseitig zu dieser linear an.

In einer Variante stimmt eine Breite des Targets annähernd mit einer Länge der überlagerten ersten und zweiten Sekundärspule überein. Dadurch werden die Geometrien des Targets und der Sekundärspulen optimal aufeinander abgestimmt, wodurch kontinuierliche Ausgangssignale der Sekundärspulen erhalten werden, die um 90° versetzt sind.

Eine Weiterbildung der Erfindung betrifft eine Kolben-Zylinder-Anordnung, insbesondere zur Verwendung in einem hydraulischen System zur Kupplungsbetätigung in einem Fahrzeug, mit einem Kolben, welcher axial beweglich in einem Zylinder angeordnet ist, und mit einem induktiven Wegsensor, dessen Target fest am Kolben positioniert ist und dessen Spulensystem an dem Zylinder angeordnet ist. Bei einer Kolben-Zylinder-Anordnung, bei welcher ein Bauraumbedarf eines induktiven Wegsensors stark reduziert werden kann, ist der induktive Wegsensor nach mindestens einem der in dieser Schutzrechtsanmeldung beschriebenen Merkmale ausgebildet.

Die Erfindung lässt zahlreiche Ausführungsbeispiele zu. Eine davon soll anhand der in der Zeichnung dargestellten Figuren näher erläutert werden.

Es zeigen:
- Fig. 1:: ein Ausführungsbeispiel für eine Kolben-Zylinder-Anordnung,
- Fig. 2:: ein Ausführungsbeispiel eines erfindungsgemäßen Spulensystems,
- Fig. 3:: eine Prinzipdarstellung der geometrischen Abmaße des erfindungsgemäßen Spulensystems nach Fig. 2,
- Fig. 4:: ein erfindungsgemäß überlagertes Spulensystem nach Fig. 1,
- Fig. 5:: drei Ausführungsbeispiele für eine mögliche Targetgeometrie,
- Fig. 6:: Darstellung der Ausgangssignale der Sekundärspulen für eine erste Targetgeometrie,
- Fig. 7:: Darstellung der Ausgangssignale der Sekundärspulen für eine zweite Targetgeometrie,
- Fig. 8:: Darstellung der Ausgangssignale der Sekundärspulen für eine dritte Targetgeometrie,
- Fig. 9:: eine Spulengeometrie eines induktiven Wegsensors nach dem Stand der Technik,
- Fig. 10:: ein induktiver Wegsensor nach dem Stand der Technik,
- Fig. 11:: Konstellationen mit zwei Sekundärspulen nach dem Stand der Technik,
- Fig. 12:: ein typisches Ausgangssignal des induktiven Wegsensors nach dem Stand der Technik.

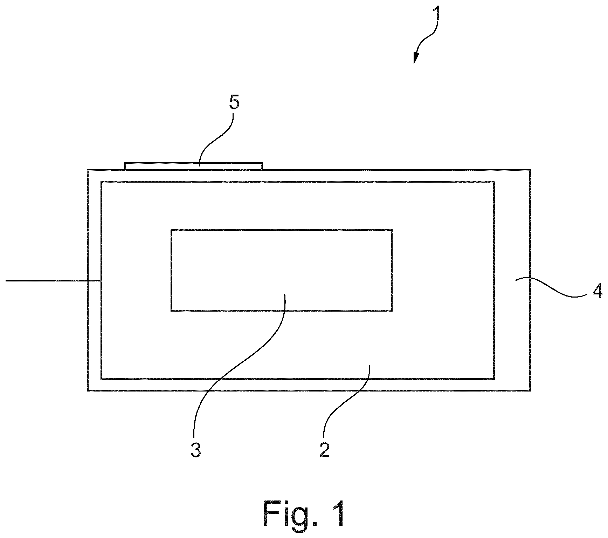

In Fig. 1 ist eine Kolben-Zylinder-Anordnung 1 dargestellt, wie sie in einem Geberzylinder eines Kupplungsbetätigungssystems eines Kraftfahrzeuges zur Anwendung kommt. Der Geberzylinder weist einen Kolben 2 auf, welcher aus einem Kunststoff besteht und an welchen ein Target 3, das aus einem elektrisch leitenden Material besteht, angeordnet ist. An der Außenwand eines Zylinders 4 der Kolben-Zylinder-Anordnung 1 ist eine Platine 5 angeordnet, die ein Spulensystem trägt. Bei der Bewegung des Kolbens 2 wird ebenfalls das Target 3 an dem auf der Platine 5 angeordneten Spulensystem vorbeibewegt.

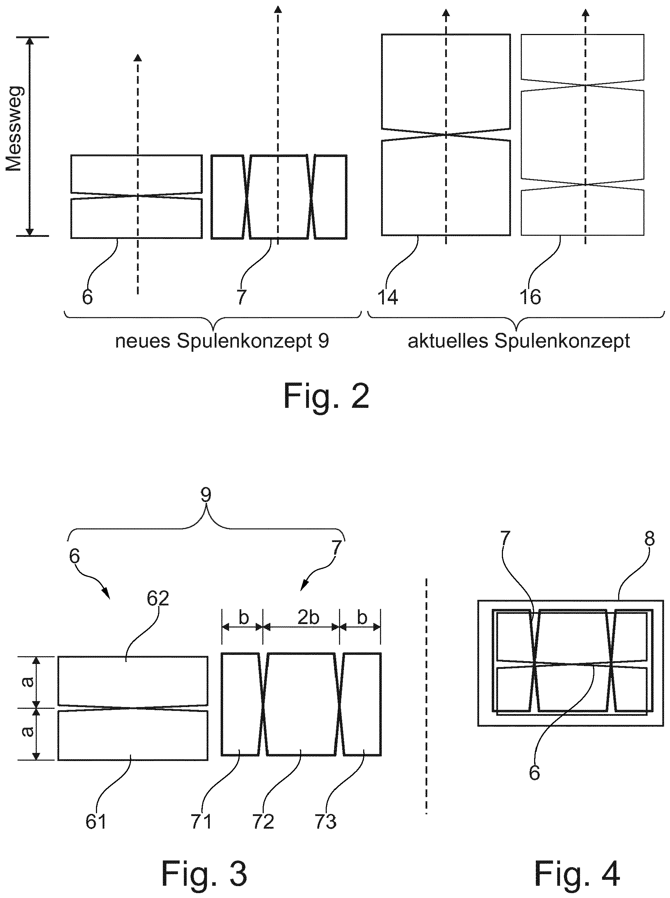

Das auf der Platine 5 angeordnet Spulensystem 9 ist in Fig. 2 dargestellt und gleichzeitig einem gebräuchlichen Spulensystem des Standes der Technik gegenübergestellt. Das erfindungsgemäße Spulensystem 9 umfasst zwei Sekundärspulen 6, 7, wovon die erste Sekundärspule 6 zwei Windungen mit einer Überkreuzung aufweist, deren Überkreuzungsachse senkrecht zum Messweg ausgebildet ist. Die zweite Sekundärspule 7 weist drei Windungen auf, wobei die nebeneinanderliegenden Windungen ebenfalls gekreuzt sind. Bei der zweiten Sekundärspule 7 ist die jeweilige Überkreuzungsachse parallel zum Messweg ausgebildet. Die von der ersten und der zweiten Sekundärspule 6, 7 abgedeckten Flächen stimmen annähernd überein, wobei in Richtung des Messweges die Breite sowohl der ersten als auch der zweiten Sekundärspule 6, 7 stark verkürzt ist und weniger als die Hälfte des Messweges beträgt.

Wie aus Fig. 3 zu ersehen, überdecken die beiden spiegelsymmetrisch ausgebildeten Windungen 61, 62 der ersten Sekundärspule 6 gleiche Flächen und weisen jeweils eine Breite a auf. Die zweite Sekundärspule 7 , welche aus drei Windungen 71, 72, 73 besteht, weist eine mittlere Windung 72 auf, welche zweimal so breit ist, wie jede der äußeren Windungen 71, 73. Fig. 4 zeigt die Anordnung der ersten und der zweiten Sekundärspule 6, 7 in der Ebene der, die beiden Sekundärspulen 6, 7 umschließenden Primärspule 8. Dabei liegen die erste und die zweite Sekundärspule 6, 7 übereinander, wobei die Länge der Sekundärspulen 6, 7 einer Breite des Targets 3 entspricht, welches die Sekundärspulen 6, 7 infolge der Bewegung des Kolbens 2 abtastet.

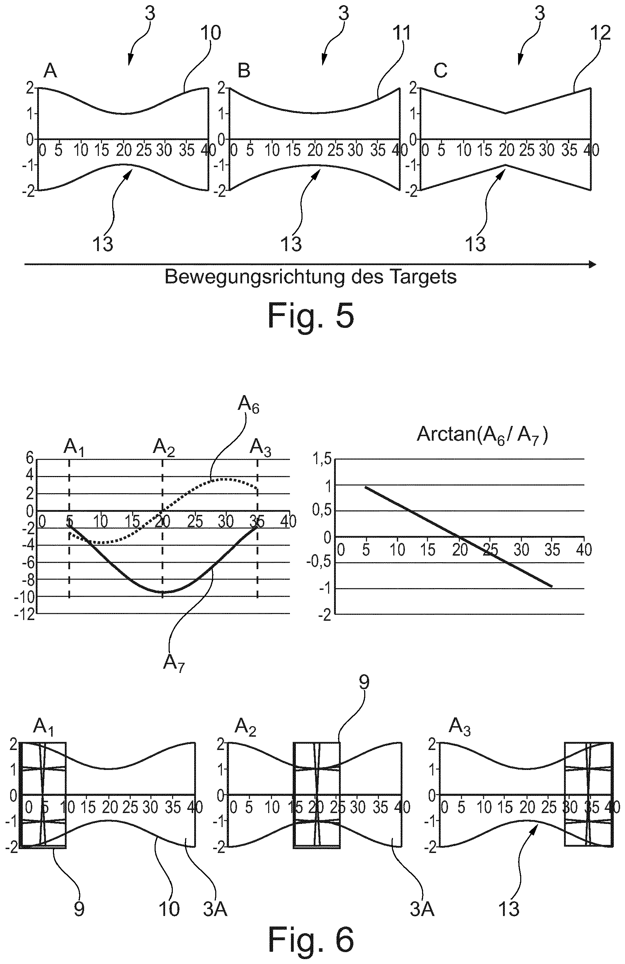

Mögliche Geometrien des Targets 3 sind in Fig. 5 dargestellt. In jedem Fall weist das Target 3 in seiner axialen Ausdehnung eine Taillierung 13 auf. Im Fall des Targets 3A ist die Außenkontur 10 des Targets 3A, welche sich axial in Bewegungsrichtung des Targets 3A erstreckt, cosinusförmig ausgebildet. Das Target 3B zeigt die Außenkontur 11, welche einen konvexen Verlauf nimmt. Im Fall des Targets 3C ist die Außenkontur 12 ausgehend von der mittig ausgebildeten Taillierung 13 stetig ansteigend nach außen geführt. In allen drei Fällen ist ein stetiger Verlauf der Außenkontur 10, 11, 12 vorgesehen. Diese Targets 3 können achssymmetrisch oder rotationssymmetrisch ausgebildet sein. Mittels solcher Targetgeometrien werden die Ausgangssignale S6, S7 der Sekundärspulen 6, 7 moduliert. Dies steht im Gegensatz zum Stand der Technik, wo die Ausgangssignale durch die Spulengeometrie moduliert werden.

Anhand der Fig. 6 bis 8 sollen die, bei den unterschiedlichen Targetgeometrien zu erwartenden Ausgangssignale A6, A7 der Sekundärspulen 6, 7 erläutert werden. Dabei wird in Fig. 6 die Geometrie des Targets 3A betrachtet, wobei der Bewegungsablauf des Targets 3A an den verschiedenen Positionen A1, A2 und A3 an Hand der Ausgangssignale S6, S7 der Sekundärspulen 6, 7 verfolgt wird. Dabei sind die Ausgangssignale S6, S7, die beim Überstreichen der Sekundärspulen 6, 7 durch die Geometrie des Targets 3A ausgegeben werden, dargestellt. Der Arcustangens Arctan, welcher aus dem Quotienten des ersten Ausgangssignals S6 der ersten Sekundärspule 6 durch das zweite Ausgangssignal S7 der zweiten Sekundärspule 7 gebildet wird, ist bei der cosinusähnlichen Gestaltung der Außenkontur 10 des Targets 3A linear und stellt somit einen zuverlässigen eindeutigen Zusammenhang zwischen dem Arcustangens und der Position des Targets 3A dar. Die Targetposition A1 besteht in der erstmalige Überdeckung des Spulensystems 9 durch den Beginn des Targets 3A. Die Position A2 stellt die Überdeckung des Spulensystems 9 durch die Taillierung 13 des Targets 3A dar, während die Position A3 die Abdeckung des Spulensystems 9 durch das Ende des Targets 3A zeigt.

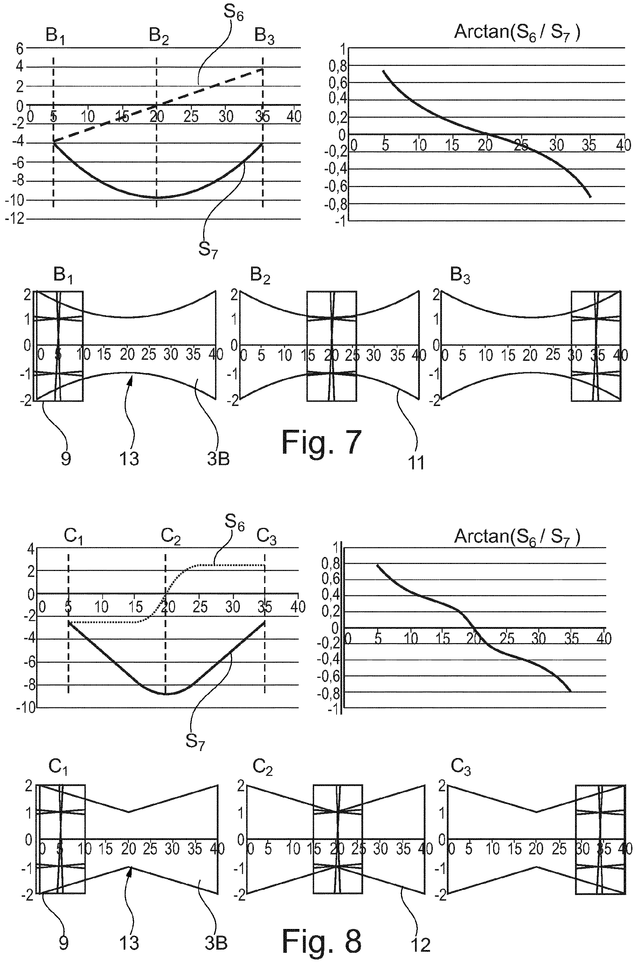

In Fig. 7 wird die Geometrie des zweiten Targets 3B betrachtet, wo die Außenkontur 11 des Targets 3B konvex ausgebildet ist. Auch hier werden die den drei Positionen B1, B2 und B3 entsprechende Ausgangssignale S6, S7 der Sekundärspulen 6, 7 betrachtet. Dabei gibt die erste Sekundärspule 6 ein annähernd lineares Ausgangssignal A6 über dem Messweg aus, während die zweite Sekundärspule 7 ein leicht parabelförmiges Ausgangssignal S7 ausgibt, welches an der Position B2, wo die Taillierung 13 des Targets 3B das Spulensystem 9 überdeckt, einen Maximalwert erreicht. Der Arcustangens des Quotienten des Ausgangssignals S6 der ersten Sekundärspule 6 durch das Ausgangssignal S7 der zweiten Sekundärspule 7 ergibt dabei eine leicht gewölbte abfallende Kurve, welche aber stetig verläuft, so dass auch hier eine eindeutige Zuordnung des Arcustangens zu dem, vom Target 3B zurückgelegten Messweg möglich ist.

Das Ausgangssignal für die Geometrie des Targets 3C, bei welcher das Target 3C ausgehend von der Taillierung 13 beidseitig linear ansteigt, ist in Fig. 8 dargestellt. Auch hier werden, wie in den anderen beiden Fällen, die gleichen Positionen C1, C2 und C3 des Targets 3C zu den Sekundärspulen 6, 7 betrachtet. Wie ersichtlich, gibt die erste Sekundärspule 6 ein Ausgangssignal S6 ab, welches im Bereich der Position C2, also bei der Überdeckung des Spulensystems 9 durch die Taillierung 13 des Targets 3C sprunghaft ansteigt, Die zweite Sekundärspule 7 zeigt wiederum ein annähernd parabelförmiges Ausgangssignal S7. Der Arcustangens Arctan aus dem Quotienten der beiden Ausgangssignale S6/S7 der Sekundärspulen 6, 7 ist ebenfalls eine stetig abfallende Kurve, die zwar leicht gewölbt, aber trotzdem einen eindeutigen Zusammenhang zwischen dem Arctan und der Targetposition widergibt.

Der beschriebene induktive Wegsensor erlaubt durch eine Veränderung der Target- und Spulengeometrie eine Verkürzung der Länge der Spulen auf ein Drittel des Messweges. Hierdurch wird der Bauraumbedarf eines solchen induktiven Wegsensors dramatisch verkleinert. Darüber hinaus erfolgt die Modulation der Ausgangssignale S6, S7 der Sekundärspulen 6, 7 durch die Geometrie des Targets 3.

### Bezugszeichenliste

- 1: Kolben-Zylinder-Anordnung
- 2: Kolben
- 3: Target
- 4: Zylinder
- 5: Platine
- 6: Sekundarspule
- 7: Sekundärspule
- 8: Primärspule
- 9: Spulensystem
- 10: Außenkontur
- 11: Außenkontur
- 12: Außenkontur
- 13: Taillierung
- 14: Sekundärspule
- 15: Target
- 16: Sekundärspule
- 61: Windung
- 62: Windung
- 71: Windung
- 72: Windung
- 73: Windung

## Patentansprüche

1. Induktiver Wegsensor, umfassend ein Spulensystem (9) mit einer planaren Primärspule (8) zur Erzeugung eines Magnetfeldes und wenigstens zwei innerhalb der Primärspule (8) angeordneten, sich überlagernden planaren Sekundärspulen (6, 7) zur Sensierung einer Position eines Targets (3), welches entlang der Sekundärspulen (6, 7) entlang eines Messwegs bewegbar ist, wobei die Sekundärspulen (6, 7) mit je einer Überkreuzung ausgebildet sind, **dadurch gekennzeichnet, dass** die erste Sekundärspule (6) eine Überkreuzung aufweist, die quer zur Bewegungsrichtung des Targets (3) ausgebildet ist, derart, dass die Überkreuzungsachse senkrecht zum Messweg ausgebildet ist, während die zweite Sekundärspule (7) eine Überkreuzung besitzt, welche parallel zur Bewegungsrichtung des Targets (3) verläuft, derart, dass die Überkreuzungsachse parallel zum Messweg ausgebildet ist und das Target (3) in seiner axialen Ausdehnung tailliert ausgebildet ist.

2. Induktiver Wegsensor nach Anspruch 1, wobei die erste, zwei Windungen (61, 62) aufweisende Sekundärspule (6) und die zweite, drei Windungen (71, 72, 73) aufweisende Sekundärspule (7) die gleichen Abmaße aufweisen und sich annähernd vollständig überdecken, wobei die Breite der ersten und der zweiten Sekundärspule (6, 7) kleiner einem halben, von dem Target (3) zurücklegbaren Messweg ist.

3. Induktiver Wegsensor nach Anspruch 2, wobei die zwei Windungen (61, 62) der ersten Sekundärspule (6) annähernd gleich große Flächen abdecken, während die zwei äußeren Windungen (71, 73) der zweiten Sekundärspule (7) gleich große Flächen abdecken und die mittlere Windung (72) der zweiten Sekundärspule (7) eine doppelt so große Fläche umfasst wie jede der äußeren Windungen (71, 73) der zweiten Sekundärspule (7).

4. Induktiver Wegsensor nach Anspruch 1, 2 oder 3, wobei die Taillierung (13) des Targets (3) annähernd mittig am Target (3) ausgebildet ist, wobei die axial verlaufende, die Taillierung (13) umfassende Außenkontur (10, 11, 12) des Targets (3) einen stetigen Verlauf aufweist.

5. Induktiver Wegsensor nach Anspruch 4, wobei die, die Taillierung (13) umfassende Außenkontur (10) des Targets (3A) in ihrem axialen Verlauf cosinusähnlich ausgebildet ist.

6. Induktiver Wegsensor nach Anspruch 4, wobei die, die Taillierung (13) umfassende Außenkontur (11) des Targets (3B) in ihrem axialen Verlauf konvex ausgebildet ist.

7. Induktiver Wegsensor nach Anspruch 4, wobei die Außenkontur (12) des Targets (3C) ausgehend von der Taillierung (13) beidseitig zu dieser linear ansteigt.

8. Induktiver Wegsensor nach mindestens einem der vorhergehenden Ansprüche, wobei eine Breite des Targets (3) annähernd mit einer Länge der überlagerten ersten und zweiten Sekundärspule (6, 7) übereinstimmt.

9. Kolben-Zylinder-Anordnung, insbesondere zur Verwendung in einem hydraulischen System zur Kupplungsbetätigung in einem Fahrzeug, mit einem Kolben (2), welcher axial beweglich in einem Zylinder (4) angeordnet ist, mit einem induktiven Wegsensor, dessen Target (3) fest am Kolben (2) positioniert ist und dessen Spulensystem (9) an dem Zylinder (4) angeordnet ist, wobei der induktive Wegsensor nach mindestens einem der vorhergehenden Ansprüche ausgebildet ist.

## Claims

1. Inductive displacement sensor, comprising a coil system (9) with a planar primary coil (8) for generating a magnetic field and at least two overlapping planar secondary coils (6, 7) which are arranged within the primary coil (8) for sensing a position of a target (3) which can be moved along the secondary coils (6, 7), the secondary coils (6, 7) being configured with in each case one crossover, **characterized in that** the first secondary coil (6) has a crossover which is configured transversely with respect to the movement direction of the target (3), whereas the second secondary coil (7) has a crossover which runs parallel to the movement direction of the target (3), and the target (3) is of tapered configuration in its axial extent.

2. Inductive displacement sensor according to Claim 1, **characterized in that** the first secondary coil (6) which has two windings (61, 62) and the second secondary coil (7) which has three windings (71, 72, 73) have the same dimensions and overlap approximately completely, the width of the first and the second secondary coil (6, 7) being smaller than half of a measurement travel which can be covered by the target (3).

3. Inductive displacement sensor according to Claim 1 or 2, **characterized in that** the two windings (61, 62) of the first secondary coil (6) cover areas of approximately identical magnitude, whereas the two outer windings (71, 73) of the second secondary coil (7) cover areas of identical magnitude and the middle winding (72) of the second secondary coil (7) comprises an area which is twice as great as each of the outer windings (71, 73) of the second secondary coil (7).

4. Inductive displacement sensor according to Claim 1, 2 or 3, **characterized in that** the tapering (13) of the target (3) is configured approximately centrally on the target (3), that axially running outer contour (10, 11, 12) of the target (3) which comprises the tapering (13) having a constant progression.

5. Inductive displacement sensor according to Claim 4, **characterized in that** the axial progression of that outer contour (10) of the target (3A) which comprises the tapering (13) is of cosine-like configuration.

6. Inductive displacement sensor according to Claim 4, **characterized in that** the axial progression of that outer contour (11) of the target (3B) which comprises the tapering (13) is of convex configuration.

7. Inductive displacement sensor according to Claim 4, **characterized in that**, starting from the tapering (13), the outer contour (12) of the target (3C) rises linearly on both sides with respect to the said tapering (13).

8. Inductive displacement sensor according to at least one of the preceding claims, **characterized in that** a width of the target (3) corresponds approximately to a length of the overlapped first and second secondary coil (6, 7).

9. Piston/cylinder arrangement, in particular for use in a hydraulic system for clutch actuation in a vehicle, having a piston (2) which is arranged axially movably in a cylinder (4), having an inductive displacement sensor, the target (3) of which is positioned fixedly on the piston (2) and the coil system (9) of which is arranged on the cylinder (4), **characterized in that** the inductive displacement sensor is configured according to at least one of the preceding claims.

## Revendications

1. Capteur de course à induction, comprenant un système de bobines (9) ayant une bobine primaire (8) plane destinée à générer un champ magnétique et au moins deux bobines secondaires planes (6, 7) superposées et disposées à l'intérieur de la bobine primaire (8), destinées à détecter une position d'une cible (3) qui est mobile le long des bobines secondaires (6, 7), dans lequel les bobines secondaires (6, 7) sont réalisées de manière à présenter respectivement un chevauchement, **caractérisé en ce que** la première bobine secondaire (6) présente un chevauchement qui est réalisé de manière à ce qu'il soit transversal à la direction de déplacement de la cible (3), alors que la deuxième bobine secondaire (7) possède un chevauchement qui est réalisé de manière à ce qu'il s'étende parallèlement à la direction de déplacement de la cible (3) et à ce que la cible (3) soit cintrée dans son extension axiale.

2. Capteur de course à induction selon la revendication 1, **caractérisé en ce que** la première bobine secondaire (6) présentant deux enroulements (61, 62) et la deuxième bobine secondaire (7) présentant trois enroulements (71, 72, 73) présentent les mêmes dimensions et se recouvrent pratiquement totalement, dans lequel la largeur des première et deuxième bobines secondaires (6, 7) est inférieure à une moitié de la course de mesure pouvant être parcourue par la cible (3).

3. Capteur de course à induction selon la revendication 1 ou 2, **caractérisé en ce que** les deux enroulements (61, 62) de la première bobine secondaire (6) recouvrent des surfaces de tailles approximativement identiques, alors que les deux enroulements extérieurs (71, 73) de la deuxième bobine secondaire (7) recouvrent des surfaces de tailles identiques et **en ce que** l'enroulement médian (72) de la deuxième bobine secondaire (7) comprend une surface deux fois supérieure à celles de chacun des enroulements extérieurs (71, 73) de la deuxième bobine secondaire (7).

4. Capteur de course à induction selon la revendication 1, 2 ou 3, **caractérisé en ce que** le ceintrage (13) de la cible (3) est réalisé de manière à ce qu'il se situe approximativement au milieu de la cible (3), dans lequel le contour extérieur (10, 11, 12) de la cible (3) s'étendant axialement et comprenant le ceintrage (13) présente une étendue constante.

5. Capteur de course à induction selon la revendication 4, **caractérisé en ce que** le contour extérieur (10) de la cible (3A) comprenant le ceintrage (13) est réalisé de manière à présenter une extension axiale de type sinusoïdal.

6. Capteur de course à induction selon la revendication 4, **caractérisé en ce que** le contour extérieur (11) de la cible (3B) comprenant le ceintrage (13) est réalisé de manière à présenter une extension axiale convexe.

7. Capteur de course à induction selon la revendication 4, **caractérisé en ce que** le contour extérieur (12) de la cible (3C) croît linéairement à partir du ceintrage (13) des deux côtés de celui-ci.

8. Capteur de course à induction selon au moins l'une des revendications précédentes, **caractérisé en ce qu'**une largeur de la cible (3) concorde approximativement à une longueur des première et deuxième bobines secondaires (6, 7) superposées.

9. Dispositif à piston-cylindre, notamment destiné à être utilisé dans un système hydraulique servant à actionner un embrayage dans un véhicule, comportant un piston (2) qui est disposé de manière mobile axialement dans un cylindre (4), et comportant un capteur de course à induction dont la cible (3) est positionnée de manière fixe sur le piston (2) et dont le système de bobines (9) est disposé sur le cylindre (4), **caractérisé en ce que** le capteur de course à induction est conçu selon au moins l'une des revendications précédentes.
